# EUROPEAN PATENT APPLICATION

(11) **EP 3 415 730 A1**
(43) Date of publication of application: **19.12.2018**
(21) Application number: 18168171.9
(22) Date of filing: 19.04.2018
(51) Int. Cl.: F01K 23/06, F01K 23/02, F01K 23/18, F02B 29/04, F02M 31/10, F22B 37/38, F22B 37/76

(54) **THERMAL ENERGY RECOVERY SYSTEM AND DETECTION UNIT**

(30) Priority: 10.05.2017 JP 2017093496; 27.07.2017 JP 2017145234
(71) Applicant: Kabushiki Kaisha Kobe Seiko Sho (Kobe Steel, Ltd.), Kobe-shi, Hyogo, 651-8585 (JP)
(72) Inventor: ADACHI, Shigeto, Takasago-shi, Hyogo 676-8670 (JP); NISHIMURA, Kazumasa, Takasago-shi, Hyogo 676-8670 (JP); NAGAHIRA, Ayaka, Kobe-shi, Hyogo 651-8585 (JP); NARUKAWA, Yutaka, Takasago-shi, Hyogo 676-8670 (JP); ARAHIRA, Kazuya, Takasago-shi, Hyogo 676-8670 (JP)
(74) Representative: TBK

(57) **Abstract**

A thermal energy recovery system includes an engine, a supercharger, an evaporator configured to evaporate a working medium by heat exchange between supercharged air and the working medium, an expander, a power recovery machine, a condenser, a pump, a circulation flow passage, and a detection unit configured to detect leakage of the working medium within the evaporator. The detection unit has a drain flow passage configured to extract part of the supercharged air in a portion between the evaporator and the engine, a drain trap provided in the drain flow passage, and a sensor provided in a portion on the upstream side of the drain trap in the drain flow passage, and the sensor being configured to detect the working medium.

## Description

### BACKGROUND OF THE INVENTION

### (FIELD OF THE INVENTION)

The present invention relates to thermal energy recovery systems.

### (DESCRIPTION OF THE RELATED ART)

Thermal energy recovery systems to recover heat of supercharged air supplied from a supercharger to an engine are widely known. For instance, JP2015-200182 A describes an exhaust heat recovery system (a thermal energy recovery system), including an engine, a supercharger having a turbine and a compressor, an exhaust heat recovery system to recover the heat of the supercharged air to be supplied from the supercharger to the engine. The turbine is driven by an exhaust gas exhausted from the engine. The compressor is linked to the turbine, and discharges the supercharged air. The exhaust heat recovery system includes an evaporator to evaporate a working medium, an expander, a power recovery machine, a condenser, and a pump. The evaporator is provided in an intake line connecting the compressor of the supercharger and the engine. In other words, in the exhaust heat recovery system, the working medium has received heat from the supercharged air to be supplied to the engine in the evaporator, and the thermal energy is recovered by the power recovery machine via the expander.

In the thermal energy recovery system described in JP2015-200182 A, a working medium flows into the engine when the working medium leaks out of a heat transfer pipe (tube) in the evaporator if the evaporator is a so-called fin-tube evaporator. To detect the leakage, a sensor capable of detecting the leakage of a working medium in the evaporator may be provided. However, since a drain is generated in the evaporator, and the drain contains components (e.g. sulfur components included in the exhaust gas that has been sucked in the compressor) other than the working medium, there is concern over erroneous detection and corrosion in the sensor, which occur due to the contact of the drain with the sensor.

An object of the present invention is to provide a thermal energy recovery system and a detection unit which are capable of preventing erroneous detection and occurrence of corrosion in a sensor configured to detect a working medium.

### SUMMARY OF THE INVENTION

To achieve the object described above, according to a first aspect of the present invention, there is provided a thermal energy recovery system, including: an engine; a supercharger having a turbine configured to be driven by an exhaust gas discharged from the engine and a compressor connected to the turbine, the compressor being configured to discharge supercharged air to be supplied to the engine; an evaporator configured to evaporate a working medium by heat exchange between the supercharged air discharged from the compressor and the working medium; an expander configured to expand the working medium flowed out of the evaporator; a power recovery machine connected to the expander; a condenser configured to condense the working medium flowed out of the expander; a pump configured to transfer the working medium flowed out of the condenser to the evaporator; a circulation flow passage connecting the evaporator, the power recovery unit, the condenser, and the pump in this order; and a detection unit configured to detect leakage of the working medium within the evaporator. The detection unit has a drain flow passage configured to extract part of the supercharged air in a portion between the evaporator and the engine, a drain trap provided in the drain flow passage, the drain trap being configured to allow liquid to pass therethrough and disallow gas to pass therethrough, and a sensor provided in a portion on an upstream side of the drain trap in the drain flow passage, the sensor being configured to detect the working medium.

In the thermal energy recovery system, since the sensor is provided in the portion on the upstream side of the drain trap in the drain flow passage, the contact of liquid (e.g. water) containing components other than the working medium with the sensor, is prevented. Hence, erroneous detection and occurrence of corrosion in the sensor are prevented.

In the aspect, the sensor may be provided above the drain trap.

Accordingly, erroneous detection is prevented more reliably because the sensor detects that a certain amount (concentration) of the working medium is accumulated in the portion between the drain trap and the sensor in the drain flow passage.

Furthermore, the drain flow passage may have a main flow passage provided with the drain trap and a branched flow passage branched out from the main flow passage and provided with the sensor.

Accordingly, erroneous detection and occurrence of corrosion in the sensor are prevented more reliably as the supercharged air without water flows in the branched flow passage.

In the aspect, the detection unit may further have a dryer provided at a connection between the main flow passage and the branched flow passage, the dryer being configured to remove water included in the supercharged air.

Accordingly, the contact of fluid (e.g. water) containing components other than the working medium with the sensor is prevented more reliably.

Moreover, the sensor may include a semiconductor sensor configured to detect water, the working medium, carbon monoxide, hydrogen sulfide, and ammonia, and an infrared sensor configured to detect water, the working medium, carbon monoxide, carbon dioxide, sulfur dioxide, and nitrogen oxide.

In this configuration, the accuracy of detecting the working medium is increased. Specifically, both the semiconductor sensor and the infrared sensor detect water, while the water is has been substantially removed by the drain trap. Therefore, when detection signals are output from both the semiconductor sensor and the infrared sensor, the gas detected by these sensors can be determined to be the working medium.

Here, both the semiconductor sensor and the infrared sensor detect carbon monoxide. Therefore, the detection unit may further have a carbon monoxide removing part provided in a portion between the water removing mechanism and the sensor in the drain flow passage, the carbon monoxide removing part being configured to remove carbon monoxide.

Accordingly, the detection accuracy of the sensor detecting the working medium is further improved.

According to a second aspect of the present invention, there is provided a thermal energy recovery system including: an engine; a supercharger having a turbine configured to be driven by an exhaust gas discharged from the engine and a compressor connected to the turbine, the compressor being configured to discharge supercharged air to be supplied to the engine; an evaporator configured to evaporate the working medium by heat exchange between the supercharged air discharged from the compressor and the working medium; an expander configured to expand the working medium flowed out of the evaporator; a power recovery machine connected to the expander; a condenser configured to condense the working medium flowed out of the expander; a pump configured to transfer the working medium flowed out of the condenser to the evaporator; a circulation flow passage connecting the evaporator, the power recovery unit, the condenser, and the pump in this order; and a detection unit configured to detect leakage of the working medium within the evaporator. The detection unit has a drain flow passage configured to extract part of the supercharged air in a portion between the evaporator and the engine, a water removing mechanism provided in the drain flow passage, the water removing mechanism being configured to remove water included in the supercharged air flowing in the drain flow passage, and a sensor provided in a portion on the downstream side of the water removing mechanism in the drain flow passage, the sensor being configured to detect the working medium.

In this energy recovery system, the contact of liquid (e.g. water) containing components other than the working medium with the sensor is prevented so that erroneous detection and occurrence of corrosion are prevented because the sensor is provided in the portion on the downstream side of the water removing mechanism in the drain flow passage.

Specifically, the water removing mechanism may include a dryer configured to remove water included in the supercharged air.

Accordingly, water is effectively removed by the dryer.

In the aspect, the detection unit may further have a discharge flow passage configured to discharge water removed by the dryer, and a drain trap provided in the discharge flow passage, the drain trap being configured to allow liquid to pass therethrough and disallow gas to pass therethrough.

Accordingly, the thermal energy recovery system is able to be continuously operated, because the water removed by the dryer is discharged through the discharge flow passage from the dryer.

Further, the sensor may include a semiconductor sensor configured to detect water, the working medium, carbon monoxide, hydrogen sulfide, and ammonia, and an infrared sensor configured to detect water, the working medium, carbon monoxide, carbon dioxide, sulfur dioxide, and nitrogen oxide.

In the aspect, the detection unit may further have a carbon monoxide removing part provided in a portion between the water removing mechanism and the sensor in the discharge flow passage, the carbon monoxide removing part being configured to remove carbon monoxide.

Moreover, in the thermal energy recovery system, the drain flow passage may have a hole configured to produce a flow of the supercharged air from the end on the upstream side of the drain flow passage toward the sensor.

Accordingly, the detection accuracy of the sensor is increased because a flow of the supercharged air is produced from the end of the upstream side of the drain flow passage toward the sensor.

Also, the thermal energy recovery system may further include: a first on-off valve provided in a portion between the condenser and the evaporator in the circulation flow passage; a second on-off valve provided in a portion between the evaporator and the expander in the circulation flow passage; and a controller configured to close the first and second on-off valves when the sensor has detected the working medium.

Accordingly, the leakage of the working medium from the evaporator is prevented, because the evaporator is disconnected from the circulation flow passage when the sensor detects the leakage of the working medium.

Further, according to a third aspect of the present invention, there is provided a detection unit configured to detect leakage of a working medium within an evaporator configured to evaporate the working medium by heat exchange between supercharged air to be supplied from a supercharger to an engine and the working medium. The detection unit includes: a drain flow passage configured to extract part of the supercharged air in a portion between the evaporator and the engine; a drain trap provided in the drain flow passage, the drain trap being configured to allow liquid to pass therethrough and disallow gas to pass therethrough; and a sensor provided on the upstream side of the drain trap in the drain flow passage, the sensor being configured to detect the working medium.

The detection unit is capable of detecting the leakage of a working medium in the evaporator as it is provided between the evaporator and the engine, and moreover, the contact of liquid (e.g. water) containing components other than the working medium with the sensor is prevented because the sensor is provided in the portion on the upstream side of the drain trap in the drain flow passage. Consequently, erroneous detection and occurrence of corrosion in the sensor are prevented.

Further, according to a fourth aspect of the present invention, there is provided a detection unit configured to detect leakage of a working medium within an evaporator configured to evaporate the working medium by heat exchange between supercharged air to be supplied from a supercharger to an engine and the working medium. The detection unit includes: a drain flow passage configured to extract part of the supercharged air in a portion between the evaporator and the engine; a water removing mechanism provided in the drain flow passage, the water removing mechanism being configured to remove water flowing in the drain flow passage; and a sensor provided in a portion on the downstream side of the water removable mechanism in the drain flow passage, the sensor being configured to detect the working medium.

In this detection unit, the same effects as described above are obtained.

As described so far, the present invention is able to provide a thermal energy recovery system and a detection unit that are able to prevent erroneous detection and occurrence of corrosion in the sensor configured to detect the working medium.

### BRIEF DESCRIPTION OF THE DRAWINGS

FIG. 1 is a view schematically showing a configuration of a thermal energy recovery system according to a first embodiment of the present invention.
FIG. 2 is a view schematically showing a configuration of a thermal energy recovery system according to a second embodiment of the present invention.
FIG. 3 is a view schematically showing a modification of the thermal energy recovery system according to the second embodiment of the present invention.
FIG. 4 is a view schematically showing a modification of the thermal energy recovery system according to the first embodiment.
FIG. 5 is a view schematically showing a configuration of a thermal energy recovery system according to a third embodiment of the present invention.
FIG. 6 is a view schematically showing a configuration of a thermal energy recovery system according to a fourth embodiment of the present invention.
FIG. 7 is a view schematically showing a modification of the thermal energy recovery system according to the fourth embodiment of the present invention.
FIG. 8 is a view schematically showing a modification to a water removing mechanism.
FIG. 9 is a view schematically showing a modification of a connected portion of a detection unit.

### DESCRIPTION OF THE PREFERRED EMBODIMENTS

Preferred embodiments of the present invention will be described below with reference to the drawings.

### [First embodiment]

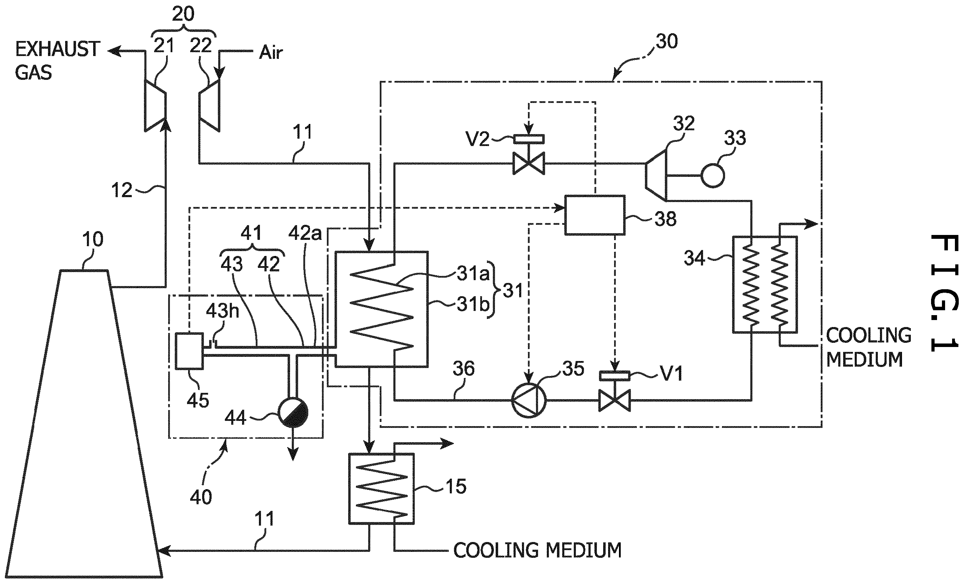

A thermal energy recovery system according to a first embodiment of the present invention will be described with reference to FIG. 1. The thermal energy recovery system includes an engine 10, a supercharger 20, a thermal energy recovery unit 30, and a detection unit 40.

The supercharger 20 includes a turbine 21 configured to be driven by an exhaust gas discharged from the engine 10, and a compressor 22 that is connected to the turbine 21 and discharges supercharged air to be supplied to the engine 10. The supercharged air discharged from the compressor 22 is supplied to the engine through an intake line 11 connecting between the compressor 22 and the engine. The exhaust gas discharged from the engine 10 is supplied to the turbine 21 through an exhaust line 12 connecting between the engine 10 and the turbine 21.

In this embodiment, an air cooler 15 is provided in the intake line 11. The air cooler 15 cools supercharged air to be supplied to the engine 10 with a cooling medium (e.g. seawater). In this embodiment, a so-called fin-tube air cooler is used as the air cooler 15.

The thermal energy recovery unit 30 includes an evaporator 31, an expander 32, a power recovery machine 33, a condenser 34, a pump 35, and a circulation flow passage 36 connecting the evaporator 31, the expander 32, the condenser 34 and the pump 35 in this order as well as a first on-off valve V1, a second on-off valve V2, and a controller 38.

The evaporator 31 is provided in a portion between the compressor 22 and the air cooler 15 in the intake line 11. The evaporator 31 evaporates a working medium by heat exchange between the supercharged air (to be supplied to the engine 10) discharged from the compressor 22 and a working medium (e.g. R245fa) that has a lower boiling temperature and a higher specific weight than the air. The evaporator 31 is a fin-tube evaporator in this embodiment. In other words, the evaporator 31 has a heat-transfer tube 31a, in which a working medium is flowing, and a casing 31b that houses the heat-transfer tube 31a. The evaporator 31 evaporates a working medium within the heat-transfer tube 31a during a process where the supercharged air, discharged from the compressor 22, passes through the casing 31b.

The expander 32 is provided in a portion on the downstream side of the evaporator 31 in the circulation flow passage 36. The expander 32 expands a gas phase working medium flowed out of the evaporator 31. Used as the expander 32 in this embodiment is a positive displacement screw expander having rotors rotationally driven by expansion energy of the gas phase working medium.

The power recovery machine 33 is connected to the expander 32. The power recovery machine 33 recovers power from a working medium by rotation due to driving the expander 32. In this embodiment, an electric generator is used as the power recovery machine 33. Alternatively, a compressor or other machines may be used as the power recovery machine 33.

The condenser 34 is provided in a portion on the downstream side of the expander 32 in the circulation flow passage 36. The condenser 34 condenses the working medium by heat exchange between the working medium flowed out of the expander 32 and a cooling medium (e.g. seawater).

The pump 35 is provided in a portion on the downstream side of the condenser 34 in the circulation flow passage 36 (in a portion between the condenser 34 and the evaporator 31). The pump 35 transfers a liquid phase working medium flowed out of the condenser 34 to the evaporator 31.

The first on-off valve V1 is provided in a portion between the condenser 34 and the evaporator 31 in the circulation flow passage 36. More specifically, the first on-off valve V1 is provided in a portion between the condenser 34 and the pump 35 in the circulation flow passage 36. The second on-off valve V2 is provided in a portion between the evaporator 31 and the expander 32 in the circulation flow passage 36. Each on-off valve V1 and V2 is able to be either open or closed.

The controller 38 controls opening and closing of the first and second on-off valves V1 and V2, and also controls the pump 35. The role of the controller 38 will be described later.

The detection unit 40 is capable of detecting leakage of a working medium within the evaporator 31. The detection unit 40 has a drain flow passage 41, a drain trap 44, and a sensor 45.

The drain flow passage 41 is a flow passage to extract part of supercharged air in a portion between the evaporator 31 and the engine 10. A connection part 42a is provided at an end of the drain flow passage 41. The connection part 42a is connected to a lower part of the casing 31b in the evaporator 31. The drain flow passage 41 has a main flow passage 42 having the connection part 42a at an end (an end on the upstream side), and a branched flow passage 43 branched out from the intermediate part of the main flow passage 42. An end on the downstream side of the main flow passage 42 is located below an end on the upstream side of the main flow passage 42. An end on the downstream side of the branched flow passage 43 is located above the end on the downstream side of the main flow passage 42. At the end on the downstream side of the branched flow passage 43, a hole 43h is provided to produce a flow of the supercharged air from the main flow passage 42 toward the end on the downstream side of the branched flow passage 43.

The drain trap 44 is provided in the drain flow passage 41. Specifically, the drain trap 44 is provided in a portion on the downstream side of a connection between the main flow passage 42 and the branched flow passage 43 in the main flow passage 42. The drain trap 44 allows liquid but disallows gas to pass therethrough.

The sensor 45 is capable of detecting the working medium. The sensor 45 is provided on the upstream side of the drain trap 44 in the drain flow passage 41. Specifically, the sensor 45 is provided at an end on the downstream side of the branched flow passage 43. The sensor 45 is provided above the drain trap 44. The sensor 45 outputs a detected value according to the concentration of the working medium.

Here, the controller 38 will be explained. The controller 38 closes the first on-off valve V1 and the second on-off valve V2 when the sensor 45 detects a working medium. In more detail, the controller 38 closes the first on-off valve V1 and the second on-off valve V2 when the value detected by the sensor 45 is equal to or more than a threshold value (when the concentration of the working medium leaked out of the heat-transfer tube 31a in the evaporator 31 is equal to or more than a standard value).

The controller 38 may close the first on-off valve V1 and the second on-off valve V2 as well as may stop the pump 35.

As described above, in the thermal energy recovery system according to the present embodiment, the contact of liquid (e.g. water) containing components other than the working medium with the sensor 45 is prevented because the sensor 45 is provided in the portion on the upstream side of the drain trap 44 in the drain flow passage 41. Therefore, erroneous detection and occurrence of corrosion in the sensor 45 are prevented.

Also, since the sensor 45 is disposed above the drain trap 44, the sensor 45 detects that a certain amount (concentration) of the working medium is accumulated in a portion between the drain trap 44 and the sensor 45 in the drain flow passage 41. Therefore, erroneous detection is prevented more reliably.

A flow of supercharged air from the main flow passage 42 toward the sensor 45 is produced because the branched flow passage 43 has the hole 43h. Therefore, the detection accuracy of the sensor 45 is increased.

Further, the leakage of the working medium from the evaporator 31 is prevented because the controller 38 closes the first on-off valve V1 and the second on-off valve V2 when the value detected by the sensor 45 is equal to or more than a threshold value, in other words, because the evaporator 31 is disconnected from the circulation flow passage 36.

### [Second embodiment]

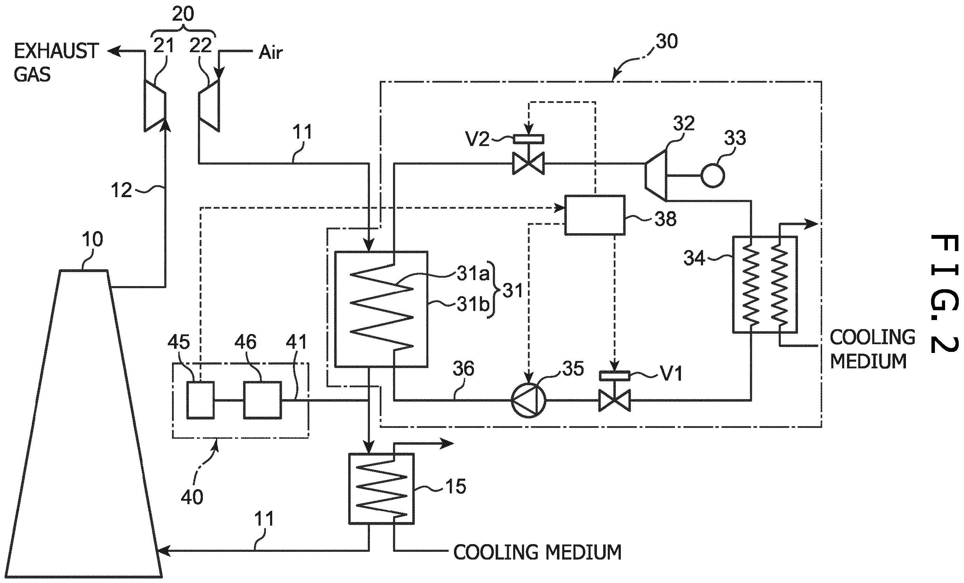

Next, a thermal energy recovery system according to a second embodiment of the present invention will be described with reference to FIG. 2. Note that in the second embodiment, only the differences from the first embodiment will be described, and the structures, the actions, and the effects same as in the first embodiment will be omitted.

In this embodiment, the configuration of the detection unit 40 is different from that in the first embodiment. Specifically, the detection unit 40 in this embodiment has the drain flow passage 41, the sensor 45, and a water removing mechanism 46. As the water removing mechanism 46, a dryer (to be denoted as a dryer 46, hereafter) is adopted in this embodiment.

The drain flow passage 41 is connected to a portion between the evaporator 31 and the air cooler 15 in the intake line 11.

The dryer 46 is provided in the drain flow passage 41. The dryer 46 removes water included in supercharged air flowing in the drain flow passage 41. The dryer 46 may include a so-called air dryer, membrane dryer, and absorption air dryer. The air dryer is an apparatus to remove water generated by cooling supercharged air and then to restore the supercharged air at approximately the normal temperature. The membrane dryer is an apparatus having hollow fiber membranes made of polymeric material. The hollow fiber membrane passes water included in a supercharged air flowing in the hollow fiber membrane out of the hollow fiber membranes while it allows the supercharged air to pass therethrough. The absorption air dryer removes water included in a supercharged air by passing the supercharged air through a porous medium such as silica gel.

The sensor 45 is provided in a portion on the downstream side of the dryer 46 in the drain flow passage 41.

As stated above, in the thermal energy recovery system of this embodiment, the contact of liquid (e.g. water) other than the working medium with the sensor 45 is prevented because the sensor 45 is provided in the portion on the downstream side of the dryer 46 in the drain flow passage 41. Consequently, erroneous detection and occurrence of corrosion in the sensor 45 is prevented also in this embodiment.

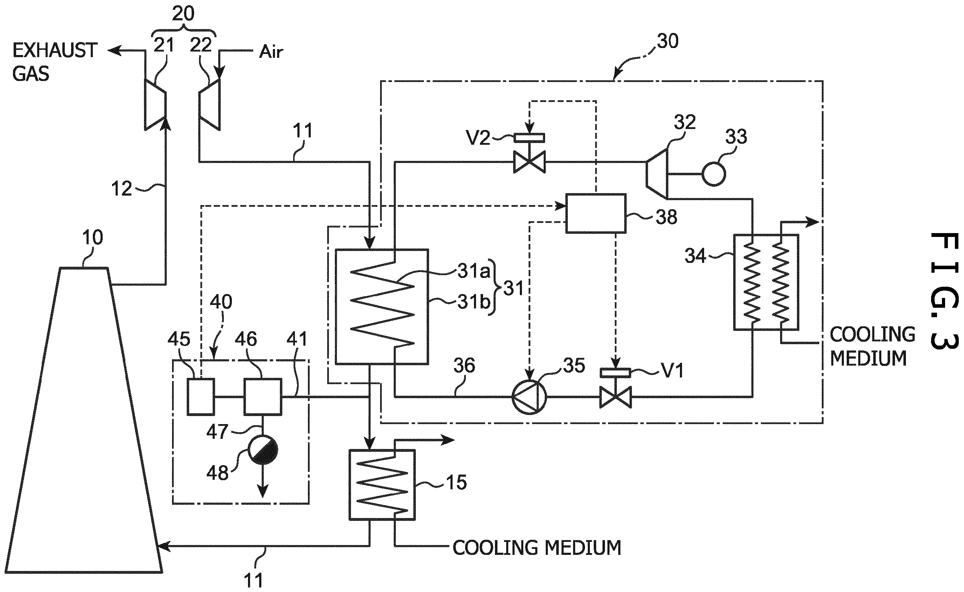

Moreover, as shown in FIG. 3, the detection unit 40 may further have a discharge flow passage 47 to discharge water removed by the dryer 46 and a drain trap 48 provided in the discharge flow passage 47.

In this aspect, the thermal energy recovery system can be operated continuously because the water removed by the dryer 46 is discharged from the dryer 46 through the discharge flow passage 47.

### [Third embodiment]

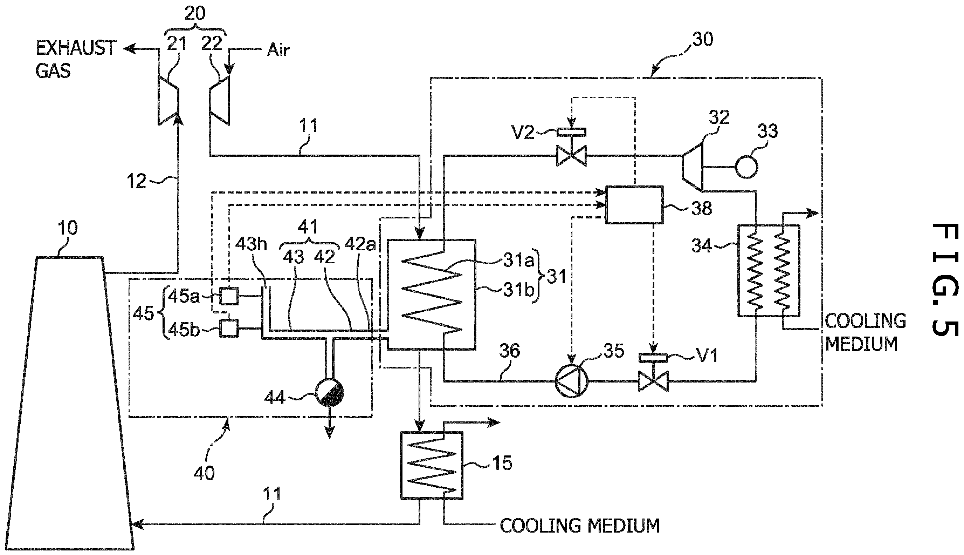

Next, a thermal energy recovery system according to a third embodiment of the present invention will be described with reference to FIG. 5. Note that in the third embodiment, only the differences from the first embodiment will be described, and the structures, the actions, and the effects same as in the first embodiment will be omitted.

In this embodiment, the sensor 45 include a semiconductor sensor 45a and an infrared sensor 45b. The semiconductor sensor 45a and the infrared sensor 45b are provided in a portion on the upstream side of the hole 43h in the branched flow passage 43. The semiconductor sensor 45a detects a change in a resistance as a gas concentration when a metal-oxide-semiconductor is brought in contact with gas. This semiconductor sensor 45a detects not only the working medium but also water, carbon monoxide, hydrogen sulfide, and ammonia. The infrared sensor 45b detects the gas concentration by the amount of infrared light that has been emitted from a light emitting part (light source) toward a light receiving part, and is absorbed by gas present between the light emitting part and the light receiving part. This infrared sensor 45b detects not only the working medium but also water, carbon monoxide, carbon dioxide, sulfur dioxide, and nitrogen oxide.

Both the semiconductor sensor 45a and the infrared sensor 45b detect water, while in this embodiment, water has been substantially removed by the drain trap 44. Therefore, when detection signals are output from both the semiconductor sensor 45a and the infrared sensor 45b, the gas detected by these sensors 45a and 45b is determined to be the working medium. Therefore, the detection accuracy is increased in this embodiment. Note that although both the semiconductor sensor 45a and the infrared sensor 45b detect carbon monoxide, the possibility of erroneous detection is negligible as the concentration of carbon monoxide in supercharged air is extremely low.

For this reason, in this embodiment, the controller 38 closes the first on-off valve V1 and the second on-off valve V2 when the controller 38 has received detection signals from both the semiconductor sensor 45a and the infrared sensor 45b.

### [Fourth embodiment]

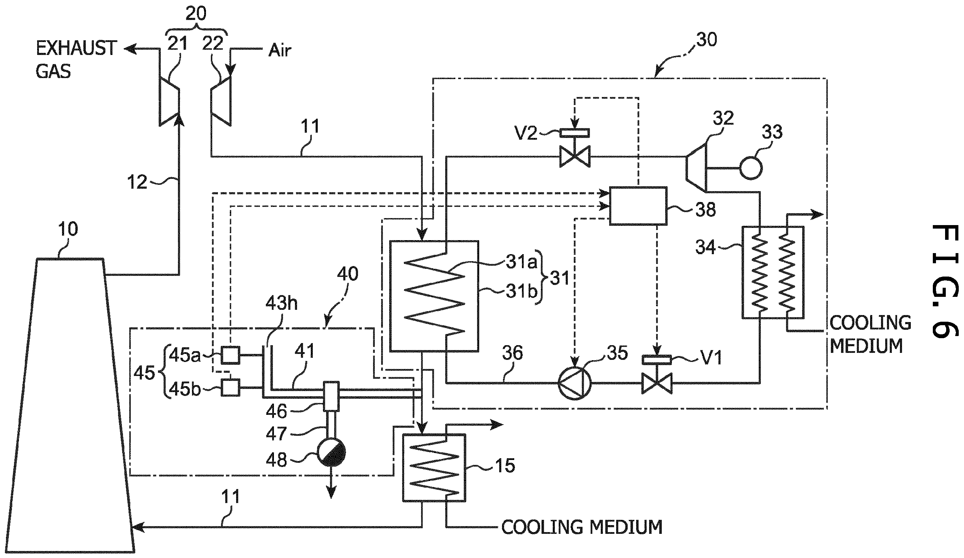

Next, a thermal energy recovery system according to a fourth embodiment of the present invention will be described with reference to FIG. 6. Note that in the fourth embodiment, only the differences from the second embodiment will be described, and the structures, the actions, and the effects same as in the second embodiment will be omitted.

Also in this embodiment, the sensor 45 include the semiconductor sensor 45a and the infrared sensor 45b. The semiconductor sensor 45a and the infrared sensor 45b are provided in a portion on the upstream side of the hole 43h in the branched flow passage 43. Therefore, the accuracy of detecting a working medium is increased in this embodiment compared with the second embodiment.

Note that in this embodiment similarly as in the third embodiment, the controller 38 closes the first on-off valve V1 and the second on-off valve V2 when it has received detection signals from both the semiconductor sensor 45a and the infrared sensor 45b.

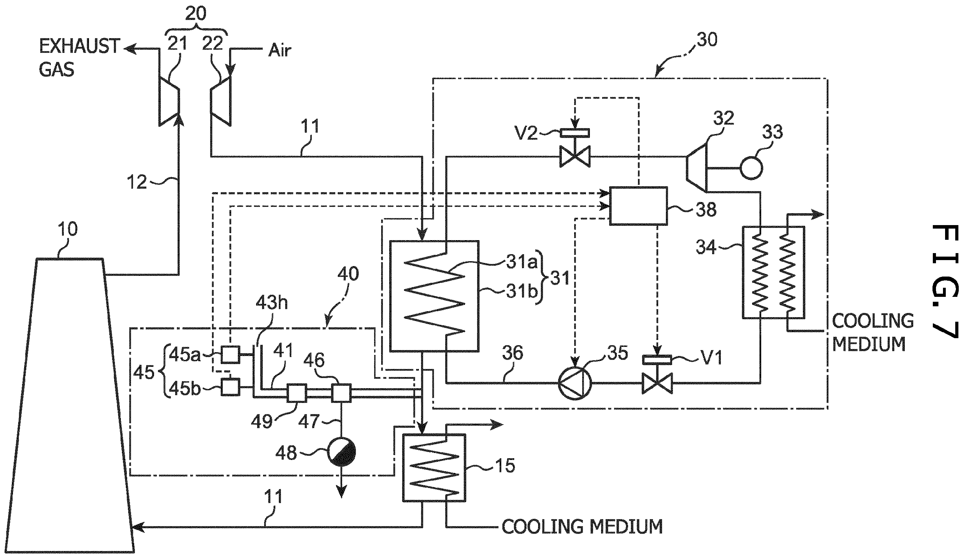

Further, as shown in FIG. 7, the detection unit 40 may further have a carbon monoxide removing part 49 provided in a portion between the dryer 46 and the sensor 45 in a drain flow passage 41, and being capable of removing carbon monoxide. In this aspect, the detection accuracy of the sensor 45 detecting the working medium is further increased. Note that in the third embodiment, the carbon monoxide removing part 49 may be provided in a portion on the upstream side of the sensors 45a and 45b in the branched flow passage 43. The carbon monoxide removing part 49 may be provided with a drain trap to recover drain water when the drain water is included.

Note that all embodiments disclosed in the present invention should be considered to be only exemplary in all aspects and not restrictive. The scope of the present invention is not presented in the description of the above embodiments but in the scope of the claims in the present invention. The scope of the present invention further includes meanings equivalent to the scope of the claims and all modifications within the scope of the claims.

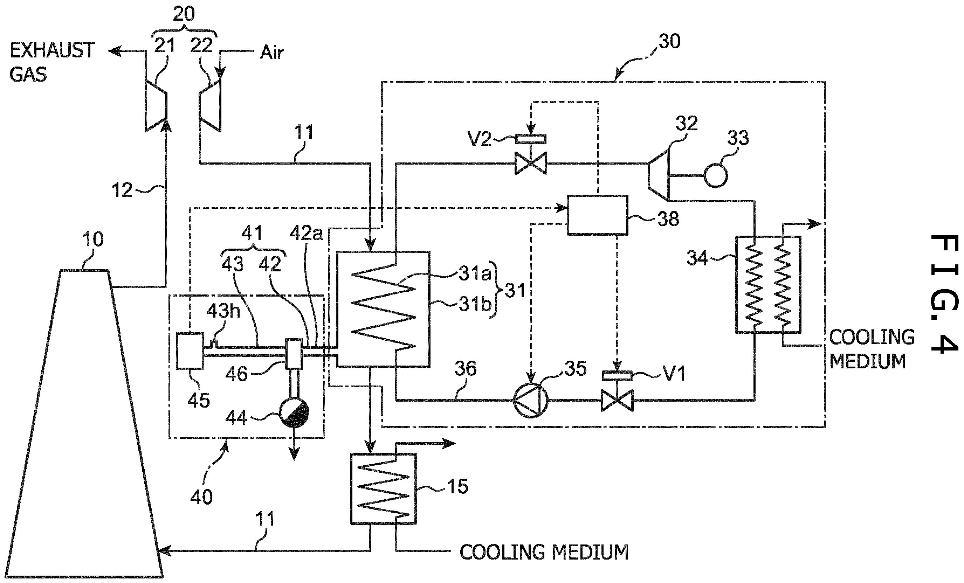

For instance, in the first embodiment, the dryer 46 may be provided at the connection between the main flow passage 42 and the branched flow passage 43, as shown in FIG. 4.

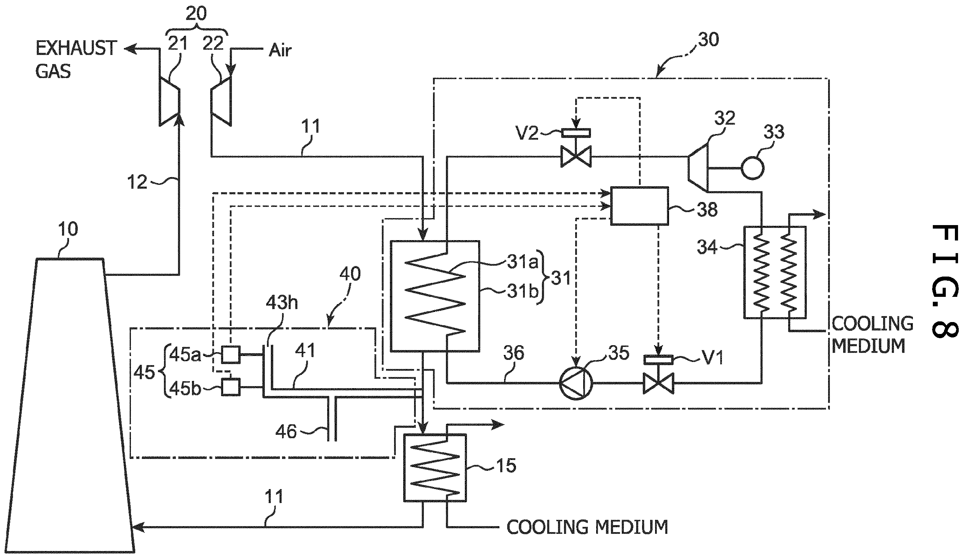

Furthermore, in the fourth embodiment, the water removing mechanism 46 may be a liquid draining flow passage that is branched off to extend downward from the drain flow passage 41, and is capable of draining water (liquid) downward from the drain flow passage 41, as shown in FIG. 8. This is the same in the aspects shown in FIGS. 2 and 3.

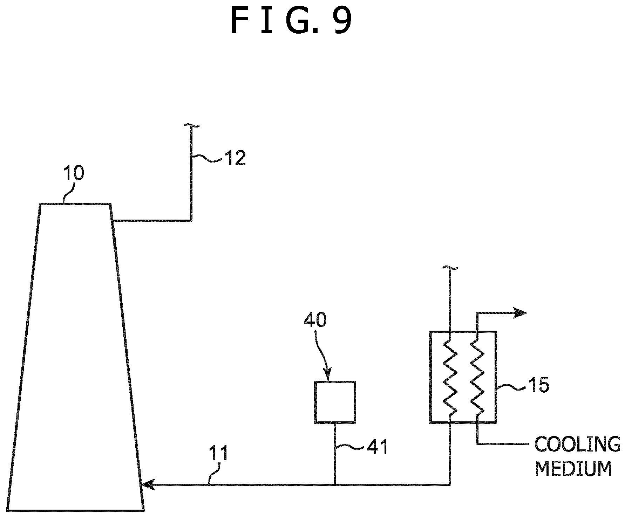

Further, the end on the upstream side of the drain flow passage 41 may be connected in a portion between the air cooler 15 and the engine 10 in the intake line 11, as shown FIG. 9. Alternatively, the end on the upstream side of the drain flow passage 41 may be connected either to a lower part of the casing of the air cooler 15 or to a portion between the evaporator 31 and the air cooler 15 in the intake line 11.

Also, the first on-off valve V1 may be provided in a portion between the pump 35 and the evaporator 31 in the circulation flow passage 36.

A thermal energy recovery system includes an engine, a supercharger, an evaporator configured to evaporate a working medium by heat exchange between supercharged air and the working medium, an expander, a power recovery machine, a condenser, a pump, a circulation flow passage, and a detection unit configured to detect leakage of the working medium within the evaporator. The detection unit has a drain flow passage configured to extract part of the supercharged air in a portion between the evaporator and the engine, a drain trap provided in the drain flow passage, and a sensor provided in a portion on the upstream side of the drain trap in the drain flow passage, and the sensor being configured to detect the working medium.

## Claims

1. A thermal energy recovery system, comprising:
an engine;
a supercharger having a turbine configured to be driven by an exhaust gas discharged from the engine and a compressor connected to the turbine, the compressor being configured to discharge supercharged air to be supplied to the engine;
an evaporator configured to evaporate a working medium by heat exchange between the supercharged air discharged from the compressor and the working medium;
an expander configured to expand the working medium flowed out of the evaporator;
a power recovery machine connected to the expander;
a condenser configured to condense the working medium flowed out of the expander;
a pump configured to transfer the working medium flowed out of the condenser to the evaporator;
a circulation flow passage connecting the evaporator, the power recovery unit, the condenser, and the pump in this order; and
a detection unit configured to detect leakage of the working medium within the evaporator, wherein
the detection unit has
a drain flow passage configured to extract part of the supercharged air in a portion between the evaporator and the engine,
a drain trap provided in the drain flow passage, the drain trap being configured to allow liquid to pass therethrough and disallow gas to pass therethrough, and
a sensor provided in a portion on an upstream side of the drain trap in the drain flow passage, the sensor being configured to detect the working medium.

2. The thermal energy recovery system according to claim 1, wherein
the sensor is provided above the drain trap.

3. The thermal energy recovery system according to claim 1 or 2, wherein
the drain flow passage has
a main flow passage provided with the drain trap and
a branched flow passage branched out from the main flow passage and provided with the sensor.

4. The thermal energy recovery system according to claim 3, wherein
the detection unit further has a dryer provided at a connection between the main flow passage and the branched flow passage, the dryer being configured to remove water included in the supercharged air.

5. The thermal energy recovery system according to any one of claims 1 to 4, wherein
the sensor includes
a semiconductor sensor configured to detect water, the working medium, carbon monoxide, hydrogen sulfide, and ammonia, and
an infrared sensor configured to detect water, the working medium, carbon monoxide, carbon dioxide, sulfur dioxide, and nitrogen oxide.

6. The thermal energy recovery system according to claim 5, wherein
the detection unit further has a carbon monoxide removing part provided in a portion between the water removing mechanism and the sensor in the drain flow passage, the carbon monoxide removing part being configured to remove carbon monoxide.

7. A thermal energy recovery system comprising:
an engine;
a supercharger having a turbine configured to be driven by an exhaust gas discharged from the engine and a compressor connected to the turbine, the compressor being configured to discharge supercharged air to be supplied to the engine;
an evaporator configured to evaporate the working medium by heat exchange between the supercharged air discharged from the compressor and the working medium;
an expander configured to expand the working medium flowed out of the evaporator;
a power recovery machine connected to the expander;
a condenser configured to condense the working medium flowed out of the expander;
a pump configured to transfer the working medium flowed out of the condenser to the evaporator;
a circulation flow passage connecting the evaporator, the power recovery unit, the condenser, and the pump in this order; and
a detection unit configured to detect leakage of the working medium within the evaporator, wherein
the detection unit has
a drain flow passage configured to extract part of the supercharged air in a portion between the evaporator and the engine,
a water removing mechanism provided in the drain flow passage, the water removing mechanism being configured to remove water included in the supercharged air flowing in the drain flow passage, and
a sensor provided in a portion on the downstream side of the water removing mechanism in the drain flow passage, the sensor being configured to detect the working medium.

8. The thermal energy recovery system according to claim 7, wherein
the water removing mechanism includes a dryer configured to remove water included in the supercharged air.

9. The thermal energy recovery system according to claim 8, wherein
the detection unit further has
a discharge flow passage configured to discharge water removed by the dryer, and
a drain trap provided in the discharge flow passage, the drain trap being configured to allow liquid to pass therethrough and disallow gas to pass therethrough.

10. The thermal energy recovery system according to any one of claims 7 to 9, wherein
the sensor includes
a semiconductor sensor configured to detect water, the working medium, carbon monoxide, hydrogen sulfide, and ammonia, and
an infrared sensor configured to detect water, the working medium, carbon monoxide, carbon dioxide, sulfur dioxide, and nitrogen oxide.

11. The thermal energy recovery system according to claim 10, wherein
the detection unit further has
a carbon monoxide removing part provided in a portion between the water removing mechanism and the sensor in the discharge flow passage, the carbon monoxide removing part being configured to remove carbon monoxide.

12. The thermal energy recovery system according to any one of claims 1 to 11, wherein
the drain flow passage has a hole configured to produce a flow of the supercharged air from the end on the upstream side of the drain flow passage toward the sensor.

13. The thermal energy recovery system according to any one of claims 1 to 12, further comprising:
a first on-off valve provided in a portion between the condenser and the evaporator in the circulation flow passage;
a second on-off valve provided in a portion between the evaporator and the expander in the circulation flow passage; and
a controller configured to close the first and second on-off valves when the sensor has detected the working medium.

14. A detection unit configured to detect leakage of a working medium within an evaporator configured to evaporate the working medium by heat exchange between supercharged air to be supplied from a supercharger to an engine and the working medium, the detection unit comprising:
a drain flow passage configured to extract part of the supercharged air in a portion between the evaporator and the engine;
a drain trap provided in the drain flow passage, the drain trap being configured to allow liquid to pass therethrough and disallow gas to pass therethrough; and
a sensor provided on the upstream side of the drain trap in the drain flow passage, the sensor being configured to detect the working medium.

15. A detection unit configured to detect leakage of a working medium within an evaporator configured to evaporate the working medium by heat exchange between supercharged air to be supplied from a supercharger to an engine and the working medium, the detection unit comprising:
a drain flow passage configured to extract part of the supercharged air in a portion between the evaporator and the engine;
a water removing mechanism provided in the drain flow passage, the water removing mechanism being configured to remove water flowing in the drain flow passage; and
a sensor provided in a portion on the downstream side of the water removable mechanism in the drain flow passage, the sensor being configured to detect the working medium.
